# EUROPEAN PATENT SPECIFICATION

(11) **EP 0 487 744 B1**
(45) Date of publication and mention of the grant of the patent: **06.09.1995**
(21) Application number: 91910839.9
(22) Date of filing: 20.06.1991
(51) Int. Cl.: B60L 13/03, B60L 13/06, B60L 13/10, B63H 19/00, B63H 21/00, B63G 8/08, B65G 54/02, B61B 13/08, B63H 19/08

(54) **UNDERWATER LINEAR TRANSPORT SYSTEM**
LINEARE UNTERWASSERTRANSPORTVORRICHTUNG
SYSTEME DE TRANSPORT LINEAIRE SOUS L'EAU

(30) Priority: 20.06.1990 JP 163475/90; 20.06.1990 JP 163476/90
(43) Date of publication of application: 03.06.1992
(73) Proprietor: KABUSHIKI KAISHA YASKAWA DENKI, Kitakyushu-Shi Fukuoka 806 (JP)
(72) Inventor: YOSHIDA, Kinjiro, Fukuoka-shi, Fukuoka 813 (JP)
(74) Representative: Müller-Boré & Partner Patentanwälte
(86) International application number: JP9100831
(87) International publication number: WO9119621

(56) References cited:
- EP-A- 0 224 617
- FR-A- 1 497 555
- JP-A- 4 814 015
- JP-A- 6 377 305
- JP-A-50 122 627
- JP-A-52 149 712
- PATENT ABSTRACTS OF JAPAN vol. 10, no. 299 (M-524)(2355) 11 October 1986

## Description

This invention relates to an underwater-linear-transport system which can be used in water and in other liquid.

JP-A-48 14015 which corresponds to the preamble of claim 1 discloses an underwater transport system comprising a track provided in the water and a vehicle having a hermetically sealed structure.

Recently, an advanced idea for a vehicle to be driven in water or the sea has been proposed by the inventors of this invention. In the concrete, a rail track is laid in water or in the sea, and a linear motor car will be driven along the a rail track.

In a conventional magnetically-levitated type of linear motor car for ground use, a levitating force and a driving force for a mobile or movable element are supplied by separate elements, respectively. For instance, according to EP-A-0 224 617, the movable element is supported by an attracting force of an electromagnet, while it is driven by the linear motor.

However, since the levitating or supporting force and driving force are separately supplied from the electromagnet and the linear motor respectively in the above conventional manner, thereby the construction of a mechanism is more complex and the production cost is increased.

Patent Abstracts of Japan, [7895 M 77] and JP-A-52 149712 disclose a magnetic floating and propelling device wherein the magnetic field generated in a moving magnetic field generating part is utilized for propelling and floating in common.

The object of this invention is to obtain a driving force using the linear motor based on the consideration that, when the vehicle runs in water or in the sea, most of its weight will be subdued by the buoyant force of the water.

This object is attained by the underwater linear-transport-system according to claim 1. The linear-transport-system according to the invention has a linear motor which can simultaneously produce the driving force and the supporting or levitating force.

Preferred embodiments of the present invention are defined in claims 2 to 4. According to claim 4 there is provided a gap sensor for measuring the gap length between a secondary side conductor of the linear induction motor and the rail track, and a control means for supplying current so that the gap length is kept constant, together with the driving force produced by the primary side and the secondary side of the linear induction motor.
Fig. 1 is a schematic view for showing the principle of generating a driving force and a magnetic repelling force according to this invention;
Fig. 2 is a schematic view for showing the principle of generating a driving force and a magnetic attracting force according to this invention;
Fig. 3 is a cross-sectional view of an experimental unit of the underwater linear-transport-system which utilized the magnetic levitating force produced by the magnetic repelling force as shown in Fig. 1;
Fig. 4 is a block diagram for showing the construction of a control circuit for an inverter;
Fig. 5 is a schematic view for explaining a block transmitting operation of the linear induction motor;
Fig. 6 is a graph of a current, a distance and a speed versus a time for the first embodiment;
Fig. 7 is a cross-sectional view of another experimental unit of the underwater linear-transport-system which utilized the magnetic repelling force as shown in Fig. 1;
Fig. 8 is a block diagram for showing the construction of a control system of the experimental unit;
Fig. 9 is a cross-sectional view of the second embodiment of this invention which utilized the magnetic attracting force as shown in Fig. 2;
Fig. 10 is a graph of the current, the distance and the speed versus time in accordance with of the second embodiment; and
Fig. 11 is a cross-sectional view of another embodiment which utilized the magnetic attracting force as shown in Fig. 2.

When a linear motor car runs on the ground, all of its weight is putting pressure on the rail track. In order to counteract the weight of the car, extensive means for producing larger magnetically levitating or supporting force have to be implemented. But according to this invention, for the vehicle running in water, taking account of the fact that the buoyant force of water will act on the vehicle, and that the difference in force between the weight of the vehicle and the buoyant force of water will be slight, the difference in force is supported by wheels, supplemented with the magnetic repelling force and magnetic attracting force of a linear induction motor, or controlled by a current of the linear induction motor to keep the gap length constant.

The magnetic repelling force and the magnetic attracting force in the linear induction motor will be schematically described.

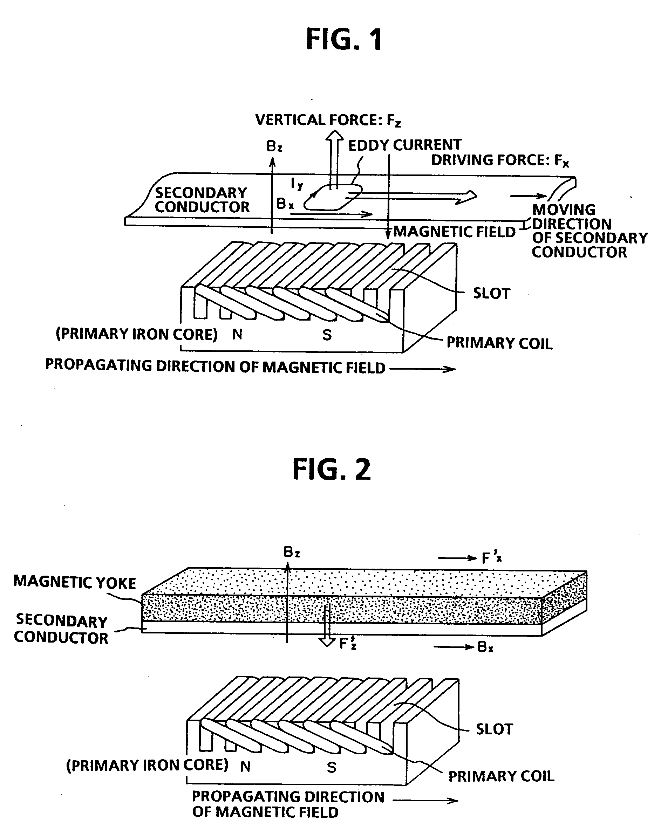

Fig. 1 shows the principle of magnetic repelling force according to this invention. A three-phase alternating current is supplied to the coil of the primary side of the linear induction motor so that an eddy current is caused in a secondary conductor formed of non-magnetic conductive material. A magnetic repelling force Fz and a driving force Fx are produced in a vertical direction and a propagating direction with respective to the moving magnetic field. The magnetic repelling force Fz and the driving force Fx can be represented as a function of current I, number of turns of the primary coil N, area of air gap s, length of gap g, and slip s.

The magnetic repelling force Fz is used as the levitating force to the vehicle, while the driving force Fx is used to drive the vehicle. Although the magnetic repelling force is too small to levitate the vehicle in the air, if the weight of the vehicle is set to be a little larger than the buoyant force of water, it is possible to levitate the vehicle in water. In addition, a control device is used to control the current instruction in feedback manner to keep the gap length g constant.

Further, when a magnetic yoke is installed on the back side of the secondary conductor of the linear induction motor, the attracting force Fz' and the driving force Fx' are generated between the primary coil and the secondary conductor of the linear induction motor.

In this situation, if the weight of the vehicle is designed and manufactured to be less than the buoyant force of water and the difference in force between the weight of the vehicle and the buoyant force of water can be offset by the attracting force Fz', the apparent weight of the vehicle will become zero, and thus the vehicle will be supported magnetically.

On the other hand, if the gap is controlled so that the weight of the vehicle is made less than the buoyant force of water and the difference in the force between the weight of the vehicle and the buoyant force of water can be offset by the attracting force Fz', then the apparent weight of the vehicle will again become zero, thereof the vehicle can be run in the levitated state along the rail track.

This invention will be described in more detail according to the preferred embodiments.

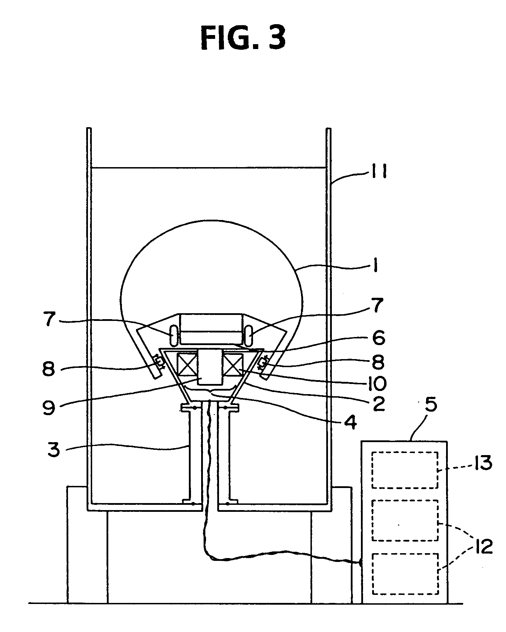

Fig. 3 is a cross-sectional view of an experimental unit of the underwater linear-transport-system utilizing the magnetically levitated force provided by the magnetic repelling force as shown in Fig. 1.

The underwater linear motor includes a vehicle 1 which is so designed and manufactured that its weight is slightly greater than the buoyant force of water, flame-type rail track 2, a pillar 3, and a controller 5 for supplying a current to the coil of the primary side of the linear induction motor 4 installed inside of the frame of the rail track. The secondary side of the linear induction motor 6 is formed of non-magnetic conductive material such as copper plate or aluminum plate and fixedly installed on the vehicle 1 so as to face the primary side of the linear induction motor 4. Further, the vehicle 1 equips the wheels 7 serving to support the vehicle when the vehicle is not levitated and wheels 8 serving to prevent the vehicle from slanting or swinging and to guide the vehicle when it runs in levitated state. The size of the vehicle is designed in construction and adjusted so that, in comparison with the buoyant force of water acting on the vehicle, its weight is slightly greater than the buoyant force of water. In this embodiment, the wheels 8 are adjusted to two inclined planes of the rail track 2. However, the rail track 2 may be formed with a vertical portion and a horizontal portion and, in this case, the wheels 8 may be separated into vertical and horizontal wheels to be set on the vertical portion and horizontal portion of the rail track 2, respectively.

An iron core 9 having slots into which a three-phase coil 10 is wound to serve as the primary side of the linear induction motor 4 is fixedly installed in the rail track 2 disposed therein from water or other liquids. Further, the rail track 2 has water-tight construction to protect the primary side of the linear induction motor 4.

The pillar 3 serves to support the rail track 2, and has a chamber therein, so as to the current supporting. Wires for the linear induction motor and signal wires for sensors can go though the chamber of the pillar 3.

The controller 5 includes an inverter 12 for supplying current to the primary coil of the linear induction motor 10 installed in the rail track 2 and a control circuit 13 therefor.

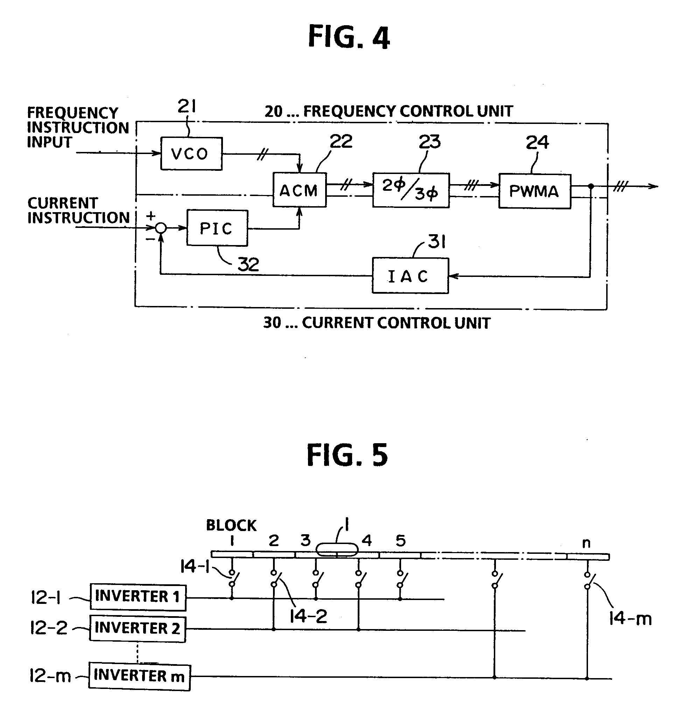

Fig. 4 shows the control circuit 13 for the inverter 12. The control circuit 13 comprises a frequency control unit 20 and an output current control unit 30. A frequency instruction signal having a constant frequency is inputted to the frequency control unit 20. A two-phase alternating current signal having a frequency corresponding to the input frequency instruction is generated in a two-phase voltage controlling oscillator (VOC) 21, and supplied to a current amplitude regulator 22. The two-phase alternating current signal is converted into a three-phase alternating current signal through a two-phase to three-phase converter 23, thereafter the three-phase alternating current signal is modulated to a pulse in a pulse width modulation amplifier (PWMA) 24, and then supplied to the inverter 12, then exciting current is supplied to each phase of the linear induction motor, as a result and an open-loop control is performed. On the other hand, in the current control unit 30, a voltage corresponding to the amplitude of the primary current vector of the linear induction motor is calculated by a current amplitude calculating circuit 31, the difference between the calculated value and the current instruction being inputted to a proportion/integral controller (PIC) 32, and then the amplitude control is performed in the current-amplitude regulator 22. A current feedback loop is formed through the current control unit 30.

In addition, in cases where the rail track is very long, the power supply for the primary coil of the linear induction motor is carried out as follows. The primary coil of the linear induction motor is separated into plural blocks, and thus plural inverters 12-1...12-m are prepared for each block, as shown in Fig. 5. In this situation, the position detectors (not shown) detect the block on which the vehicle 1 is located, and then the inverter is selected by switches 14-1...14-m to supply the exciting current to the primary coil of the linear induction motor.

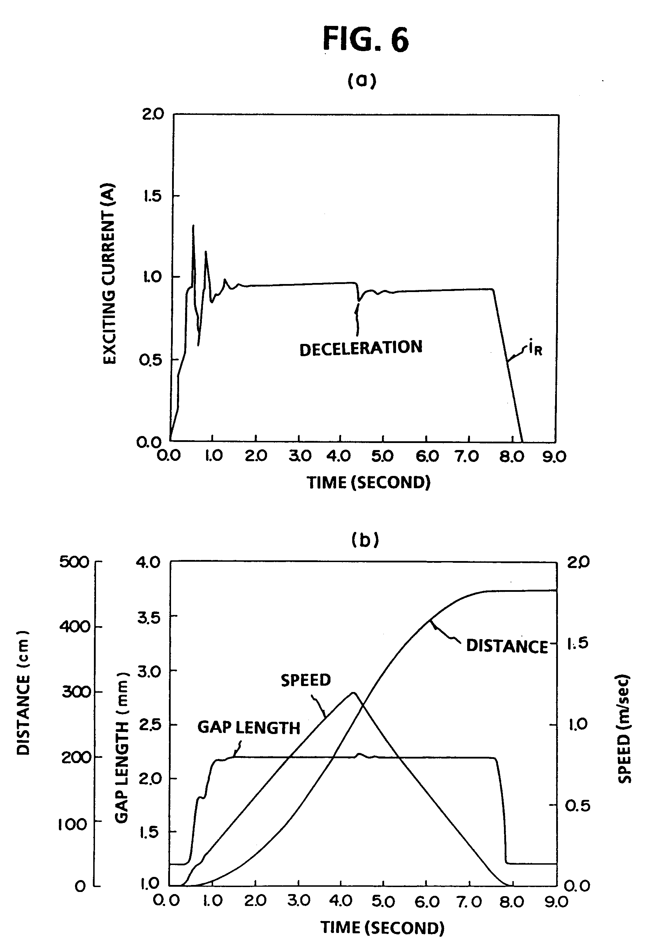

In order to allow the vehicle 1 to run in the magnetic levitation, firstly the frequency of the inverter 12 is fixed to a certain value, in this condition, the wheels 7 contact with the rail track 2, thereafter, increasing the exciting current for the coils 10 until the gap between the wheels 7 and the rail track 2 reaches a certain instruction value, the vehicle 1 is gradually levitated, a current-instruction pattern by a simulation is shown in Fig. 6(a). According to this result, the control circuit supplies a frequency and a current instruction to the inverter 12. In this operation, the current flows along the primary coil of the linear induction motor 4 from the inverter 12, and the driving force and levitating force simultaneously act upon the vehicle 1 levitating the vehicle in a certain gap length. Fig. 6(b) shows the relationship between levitating force, velocity, moving distance of the vehicle 1 and time.

As an additional method of utilizing the magnetic repelling force shown in Fig. 1, the primary side of the linear induction motor is provided so as to face the lower surfaces of the rail track 2, moreover the secondary side of the linear induction motor is installed at a still lower position so as to face the primary side, and the weight of the vehicle is adjusted slightly less than the levitating force acting on the vehicle, so that when the vehicle is driven, the attracting force is performed in the lower side to act on the vehicle and pull it downward.

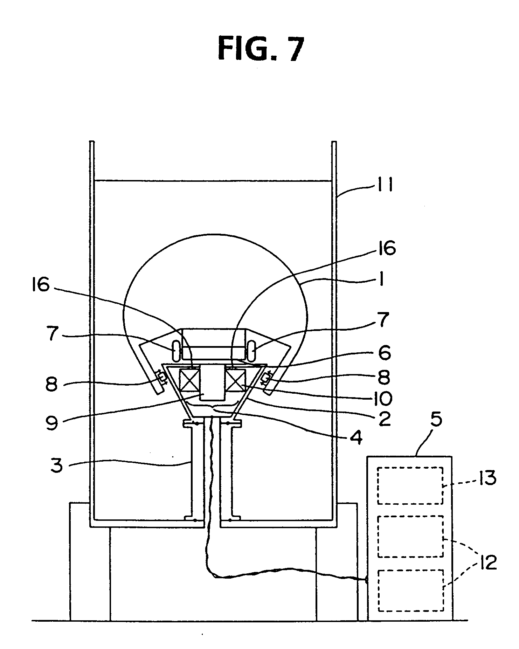

Fig. 7 shows an experimental unit according to the second embodiment. A gap sensor 16 is equipped in the unit shown in Fig. 3, and measure the gap between the conductor of the secondary side of the linear induction motor and the rail track 2. This gap sensor 16 may be used of an electromagnetic induction type, an inductance measuring type, or so on.

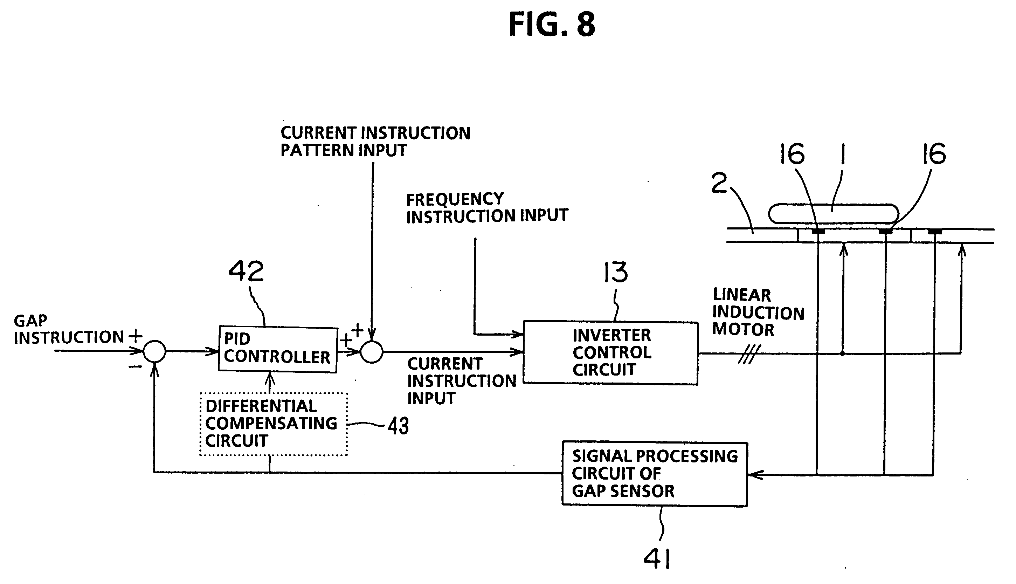

Fig. 8 is a block diagram showing the control system according to this embodiment. A signal corresponding to the gap measured by the gap sensor 16 is converted to the length of the gap by means of a signal processing circuit 41, and then compared with a gap instruction. The difference between the gap length and the gap instruction is input into a PID controller 42, and a current corresponding to the difference is then output. Thereafter, the current value and a current instruction pattern are added to the current, and then input into the inverter control circuit 13.

In order to allow the vehicle 1 to be driven under levitating condition, firstly, the frequency of the inverter 12 is fixed to a certain value, the wheels 7 loaded with the vehicle 1 are in contact with the rail track 2 in this condition, thereafter increasing the exciting current for the coil 10 until the gap between the wheels 7 and the rail track 2 reaches a certain instruction value, the vehicle 1 is gradually levitated, a pattern of a current instruction value by a simulation is shown in Fig. 6(a). According to this result, the inverter control circuit 13 supplies a frequency and a current instruction to the exciting coils 10 of the linear induction motor. In this method, the exciting current flows along the primary coil of the linear induction motor 4 from the inverter 12, and vehicle 1, the driving force and the levitating force simultaneously act upon the vehicle, whereby the vehicle is levitated in a certain gap length and driven forward. Fig. 6(b) shows the relationship between levitating force, velocity, moving distance of the vehicle 1 and a time. If there are variations in the gap length, the control system would perform feedback control to keep the difference between the gap length and the gap instruction down to zero. When it is necessary to accurately maintain the levitating gap, a differential compensating circuit 43 as shown in Fig. 8 is installed to process the signal from the signal processing circuit 41, and subject a negative feedback to the output of the PID controller 42 using the differential signal.

In the manner described above, the exciting current of the linear induction motor is controlled so that the gap is kept in a constant value. The other actions and effects of this embodiment are same as those of the embodiment as shown in Fig. 3, and thus the description thereof is omitted here.

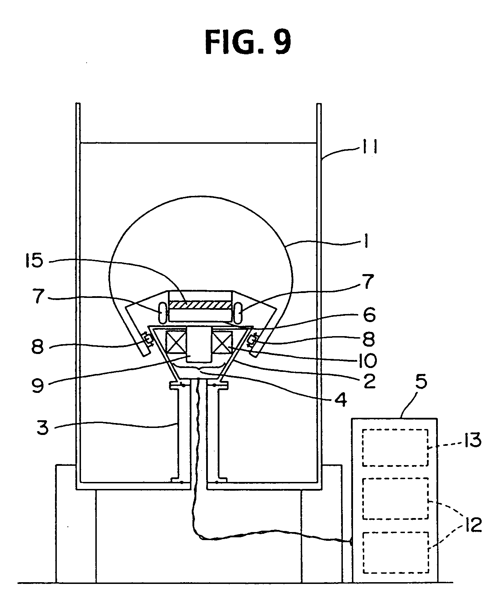

Fig. 9 is a cross-sectional view for showing another experimental unit of an underwater linear-transport-system utilizing the magnetic attracting force shown in Fig. 2. In this system, a magnetic yoke 15 serving as a secondary iron core is equipped at an upper portion of the secondary side of the linear induction motor 6, and the vehicle 1 is so designed and manufactured that its weight is slightly less than the buoyant force of water. This will allow the wheels 8 to be ordinarily in contact with the rail track 2 but, when the vehicle is driven forward, the apparent weight of the vehicle will become zero by the magnetic attracting force and run by the driving force. Since the absolute value of magnetic attracting force of this occasion is larger than that of magnetic repelling force of the occasion shown in Fig. 1, it is possible to reduce the apparent weight of the vehicle 1 to zero with only a small amount of power. The other construction and the control circuit of this unit are the same as those of the embodiment described above, and thus the description thereof is eliminated here.

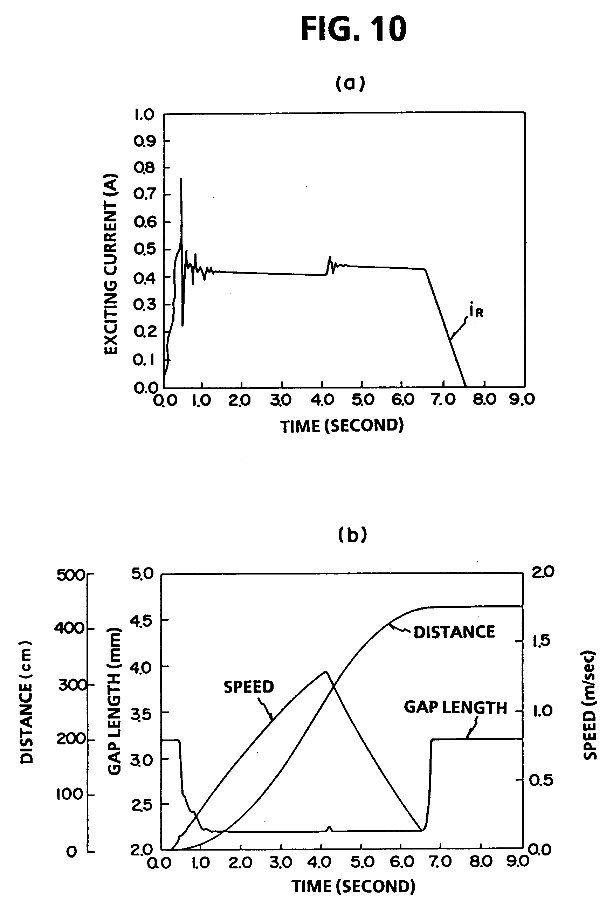

The current instruction pattern of this system is shown in Fig. 10(a), and an example of the relationship between levitating force, velocity, moving distance of the vehicle 1 and time is shown in Fig. 10(b).

As another method for utilizing the magnetic attracting force as shown in Fig. 2, the primary side of the linear induction motor is installed so as to face the lower surfaces of the rail track 2, and the secondary side of the linear induction motor is installed in a still lower position so as to face to the primary side, so that the weight of the vehicle is a little larger than the levitating force acting on the vehicle, and when the vehicle is driven, the vehicle can be levitated while held up from the lower side. In this occasion, it is reasonable to install a magnetic yoke on the back of the secondary side of the linear induction motor.

In addition, all of the above embodiments are dependent on the magnetic repelling or attracting force of the linear induction motor to offset the difference in force between the weight of the vehicle and the buoyant force of water acting on the vehicle. However, if the linear induction motor serves only as means for supplying a driving force, the difference in force between the weight of the vehicle and the buoyant force of water may be supported by wheels. This kind of transport system can be fully expected to achieve the same working effect as the above embodiments and, in addition, the control device can be remarkably simplified.

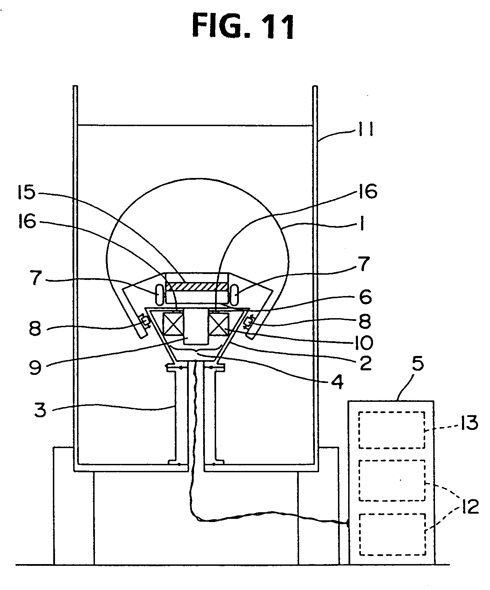

Fig. 11 is a cross-sectional view for showing more another experimental unit of an underwater linear-transport-system utilizing the magnetic attracting force shown in Fig. 2. In this system, a magnetic yoke 15 serving as a secondary iron core is installed at an upper portion of the secondary side of the linear induction motor 6, and the vehicle 1 is designed and manufactured so that its weight is a little less than the buoyant force of water acting on it to allow the wheels 8 to be ordinarily in contact with the rail track 2. When the vehicle runs, the vehicle is controlled so that the gap measured by the gap sensor 16 is coincident with the gap instruction. Since the absolute value of the magnetic attracting force of this occasion is larger than that of magnetic repelling force of the occasion shown in Fig. 1, it is possible to reduce the apparent weight of the vehicle 1 to zero with only a small amount of power. The other construction and the control circuit of this unit are the same as those of the embodiment as shown in Fig. 9, and thus the description thereof is eliminated here.

As described above, according to this invention, by making use of the buoyant force of water acting on the vehicle in the water, the linear transportation of the vehicle can be performed with light load contacting or non-contacting on the rail track in the water. There is no energy loss due to friction in this transportation, and the transportation can be very efficiently performed.

In addition, the control of the gap enables the linear transportation of the vehicle to be performed without contacting the rail track in the water. There is no energy loss due to friction in this transportation, and the transportation can be very efficiently performed.

This invention can be utilized in industrial fields of transportation in the sea.

## Claims

1. An underwater linear-transport-system comprising:
a rail track (2) provided in the water; and a vehicle (1) with hermetically sealed structure;
characterized in that
the linear-transport-system further comprises: a linear induction motor (4) which primary side is provided in said rail track (2) and secondary side is provided on said vehicle (1); a controller (5) which provides an inverter (12) for supplying current to a primary coil of said linear induction motor (4); and wheels (7, 8);
wherein the weight of said vehicle (1) is manufactured slightly greater than the buoyant force of water; said vehicle (1) is levitated by magnetic repelling force (Fz) caused by reaction between the moving magnetic field and the induced eddy current; and said wheels (7) support said vehicle (1) when said vehicle (1) is not levitated;
or wherein the weight of said vehicle (1) is manufactured slightly less than the buoyant force of water; said vehicle (1) is attracted by magnetic attracting force (Fz') caused by action between a magnetic yoke (15) installed at an upper portion of the secondary side of the linear induction motor and said rail track (2); and said wheels (8) contact with said rail track (2) when said vehicle (1) is not attracted.

2. The underwater linear-transport-system according to claim 1, wherein said controller (5) equips a control circuit (13) for said inverter (12) comprising a frequency control unit (20) and a current control unit (30).

3. The underwater linear-transport-system according to claim 1, wherein said linear induction motor (4) is separated into plural blocks (12-1,...12-m), and said inverter (12) is prepared for each of blocks (12-1,...12-m), and a plurality of switches (14-1,...14-m) for selecting the inverter (one of 12-1,...12-m) supplying the exciting current to the block of the linear motor, where the vehicle (1) is located.

4. The underwater linear-transport-system according to claim 1 or 2, wherein said rail track (2) equips a gap sensor (16) measuring the gap between the conductor or said secondary side of said linear induction motor (4) and the surface of said rail track (2), and said controller (5) equips a PID controller (42), and a differential compensating circuit (43), and a signal processing circuit (41) converting the output of said gap sensor (16) to a gap instruction, so as to control the gap length keeping constant.

## Patentansprüche

1. Lineares Unterwassertransportsystem, welches umfaßt:
eine im Wasser vorgesehene Gleiseinrichtung (2); und ein Fahrzeug (1) mit einer hermetisch abgedichteten Struktur;
dadurch gekennzeichnet, daß
das lineare Transportsystem weiterhin umfaßt: einen linearen Induktionsmotor (4), dessen Primärseite in der Gleiseinrichtung (2) vorgesehen ist und dessen Sekundärseite an bzw. in dem Fahrzeug (1) vorgesehen ist; eine Steuer- bzw. Regeleinrichtung (5), welche einen Inverter (12) zum Liefern von Strom zu einer primären Windung bzw. Spule des linearen Induktionsmotors (4) bereitstellt; und Räder (7, 8);
wobei das Gewicht des Fahrzeugs (1) etwas größer hergestellt ist, als die Auftriebskraft des Wassers; wobei das Fahrzeug (1) durch die magnetische, abstoßende Kraft (Fz) levitiert, welche durch die Reaktion bzw. Wechselwirkung zwischen dem bewegten Magnetfeld und den indizierten Wirbelstrom verursacht ist; und wobei die Räder (7) das Fahrzeug (1) tragen, wenn das Fahrzeug (1) nicht levitiert;
oder wobei das Gewicht des Fahrzeugs (1) etwas kleiner hergestellt wird als die Auftriebskraft des Wassers; wobei das Fahrzeug (1) durch die magnetische, anziehende Kraft (Fz') angezogen ist, welche durch die Wechselwirkung zwischen einem bei einem oberen Abschnitt der Sekundärseite des linearen Induktionsmotors installierten Magnetjoch (15) und der Gleiseinrichtung (2) verursacht ist; und wobei die Räder (8) mit der Gleiseinrichtung (2) in Kontakt sind, wenn das Fahrzeug (1) nicht angezogen wird.

2. Lineares Unterwassertransportsystem gemäß Anspruch 1, wobei die Regel- bzw. Steuereinrichtung (5) eine Regel- bzw. Steuerschaltung (13) für den Inverter (12) aufweist, welche eine Frequenzregeleinheit bzw. -steuereinheit (20) und eine Stromregeleinheit bzw. -steuereinheit (30) umfaßt.

3. Lineares Unterwassertransportsystem gemäß Anspruch 1, wobei der lineare Induktionsmotor (4) in eine Vielzahl von Blöcken (12-1, ... 12-m) geteilt ist, und der Inverter (12) für jeden der Blöcke (12-1, ... 12-m) vorgesehen ist, wobei eine Vielzahl von Schaltern (14-1, ... 14-m) vorgesehen ist zum Selektieren bzw. Auswählen des Inverters (einer von 12-1, ... 12-m), und zwar zum Liefern des Anregungsstromes zu dem Block des linearen Motors, wo das Fahrzeug (1) angeordnet bzw. befindlich ist.

4. Lineares Unterwassertransportsystem gemäß Anspruch 1 oder 2, wobei die Gleiseinrichtung (2) einen Spalt- bzw. Lückensensor (16) aufweist, welcher den Spalt bzw. die Lücke zwischen dem Leiter der Sekundärseite des linearen Induktionsmotors (4) und der Fläche bzw. Oberfläche der Gleiseinrichtung (2) mißt bzw. nachweist, wobei die Regel- bzw. Steuereinrichtung (5) aufweist: einen PID-Regler (42), eine differential- bzw. ausgleichkompensierende Schaltung (43) und eine Signalverarbeitungsschaltung (41), welche den Ausgang des Spaltsensors (16) zu einem Spalt- bzw. Lückenbefehl konvertiert, und zwar um die Spalt- bzw. Lückenlänge derartig zu regeln bzw. steuern, daß sie konstant gehalten wird.

## Revendications

1. Système de transport linéaire subaquatique comprenant :
une voie (2) sous l'eau; et un véhicule pourvu d'une structure hermétiquement étanche;
caractérisé en ce que
le système de transport linéaire comprend de plus : un moteur à induction linéaire (4) dont une partie primaire est dans ladite voie (2) et la partie secondaire est sur ledit véhicule (1); une commande (5) comprenant un inverseur (12) pour alimenter en courant une bobine primaire dudit moteur à induction linéaire (4); et des roues (7,8);
dans lequel le poids dudit véhicule (1) est fixé par construction légèrement plus élevé que la poussée hydrostatique de l'eau; ledit véhicule magnétique (1) est soulevé par la force magnétique de répulsion (F2) engendrée par la réaction entre le champ magnétique en mouvement et les courants de Foucault induits; et lesdites roues (7) supportent ledit véhicule (1) lorsque ledit véhicule (1) n'est pas soulevé;
ou dans lequel le poids dudit véhicule (1) est fixé par construction légèrement inférieur à la poussée hydrostatique de l'eau; ledit véhicule (1) est attiré par la force d'attraction magnétique (Fz') engendrée par l'action entre une culasse (15) montée dans une partie supérieure de la partie secondaire du moteur à induction linéaire et ladite voie (2); et lesdites roues (8) sont en contact avec ladite voie (2) lorsque ledit véhicule (1) n'est pas attiré.

2. Système de transport linéaire subaquatique selon la revendication 1, dans lequel ladite commande (5) comprend un circuit de commande (13) dudit inverseur (12) comprenant une unité de commande de fréquence (20) et une unité de commande de courant (30).

3. Système de transport linéaire subaquatique selon la revendication 1, dans lequel ledit moteur à induction linéaire (4) est divisé en plusieurs blocs (12-1, .... 12-m), et ledit inverseur (12) est préparé pour chacun des blocs (12-1,.... 12-m), et une pluralité de commutateurs (14-1,.... 14-m) pour choisir l'inverseur (l'un de 12-1,.... 12-m) délivrant le courant d'excitation au bloc du moteur linéaire où se trouve le véhicule (1).

4. Système de transport linéaire subaquatique selon la revendication 1 ou 2, dans lequel ladite voie (2) est munie d'un détecteur d'espacement (16) mesurant l'espacement entre le conducteur de ladite seconde partie dudit moteur à induction linéaire (4) et la surface de ladite voie (2), et ladite commande (5) comprend un régulateur à triple action (42), et un circuit de compensation différentiel (43), et un circuit de traitement de signal (41) convertissant la sortie dudit détecteur d'espacement (16) en une instruction d'espacement, de façon à imposer une valeur constante à la grandeur de l'espacement.
